# EUROPEAN PATENT APPLICATION

(11) **EP 4 142 312 A1**
(43) Date of publication of application: **01.03.2023**
(21) Application number: 20932591.9
(22) Date of filing: 22.04.2020
(51) Int. Cl.: H04W 4/06, H04W 28/04

(54) **METHOD AND DEVICE FOR DATA TRANSMISSION**

(71) Applicant: GUANGDONG OPPO MOBILE TELECOMMUNICATIONS CORP., LTD., Dongguan, Guangdong 523860 (CN)
(72) Inventor: TIAN, Wenqiang, Dongguan, Guangdong 523860 (CN); SHEN, Jia, Dongguan, Guangdong 523860 (CN); XU, Jing, Dongguan, Guangdong 523860 (CN)
(74) Representative: Manitz Finsterwald Patent- und Rechtsanwaltspartnerschaft mbB
(86) International application number: PCT/CN2020/086125
(87) International publication number: WO 2021/212365

(57) **Abstract**

A method and device for data transmission. The method comprises: a first device determines configuration information of a first resource, where the configuration information of the first resource comprises: cycle information of the first resource and information of the first resource; the first device transmits the configuration information of the first resource to multiple second devices; and the first device multicasts first information to the multiple second devices via the first resource. With the first device transmitting the first information to the multiple second devices in a multicasting manner, compared with the transmission of information in a unicasting manner, the redundancy of data transmitted is reduced, and the transmission efficiency is increased.

## Description

### TECHNICAL FIELD

The present disclosure relates to the field of communication, and in particular to the field of data transmission.

### BACKGROUND

In a process of scheduling downlink data, a base station may schedule time and frequency resources for a specific user equipment (UE) through downlink control information (DCI) and may indicate a corresponding transmission method. The UE may take the provided time and frequency resources and the transmission method to receive data and may give feedback about data reception at a given resource location. A network may reschedule and retransmit data for a user who fails to receive data.

Applying a neural network includes a training phase and an inference phase. In the training phase, a training set including a large amount of data is taken as an input parameter for a to-be-trained model and input to the neural network. A large number of training and parameter iterations may be applied to the neural network based on a specific training algorithm, such that a to-be-determined parameter of the to-be-trained model may be determined, and a trained neural network model may be obtained. For example, a neural network for recognizing puppies may be trained based on a large number of images of puppies. In the inference phase, the trained neural network may be used to perform inference operations such as recognition, classification or information recovery. For example, the trained neural network may be applied to identify a puppy in an image.

Traditionally, training of the neural network may be centralized. For example, the model may be trained after a data center receives a large amount of training set data. Considering user privacy protection, computing power distribution and other factors, a new neural network training method may be proposed: "federation learning". While performing the "federation learning" of the training process, the training set may be distributed at various sub-nodes (UEs). The "federal learning" of the training process may include the following. (1) A local neural network may be generated at each sub-node based on a local training set and may be uploaded to a master node (network). (2) The master node may synthesize a current global neural network based on obtained local neural networks and may transmit the global neural network to each sub-node. (3) The sub-node may use the new global neural network to perform a next training iteration. Finally, the training of the neural network may be completed through cooperation of various sub-nodes and the master node.

While performing the federation learning to train the neural network, a large amount of downlink periodic data needs to be transmitted to various sub-nodes. According to the downlink data scheduling method in the art, the downlink data transmission may be inefficient. For example, a network needs to transmit 100 parts of data to 1000 users periodically at 100 time points. When the downlink data scheduling method in the art is performed, 100* 1000 times of DCI scheduling may be performed, and 100* 1000 times of transmission may be performed to transmit the data.

### SUMMARY OF THE DISCLOSURE

According to the present disclosure, a data transmission method, a data transmission apparatus, a re-transmission method, and a re-transmission apparatus are provided.

The present disclosure provides following technical solutions.

A data transmission method is provided and includes: determining, by a first device, configuration information of a first resource, wherein the configuration information of the first resource comprises: period information of the first resource and information of the first resource; sending, by the first device, the configuration information of the first resource to a plurality of second devices; and multicasting, by the first device, first information to the plurality of second devices through the first resource.

Another data transmission method is provided and includes: receiving, by at least one of a plurality of second devices, configuration information of a first resource sent by a first device, wherein the configuration information of the first resource comprises: period information of a first resource and information of the first resource, and the first resource is configured to multicast first information to the plurality of second devices in one period; and receiving, by the at least one of a plurality of second devices, the first information multicasted by the first device through the first resource.

A retransmission method is provided and includes: receiving, by a first device, feedback information sent by at least one second device respectively, wherein the feedback information is respectively configured to indicate that the at least one second device fails to receive first information; and sending, by the first device, the first information to the at least one second device through a retransmission resource respectively.

Another retransmission method is provided and includes: sending, by at least one second device respectively, feedback information to a first device, wherein the feedback information is respectively configured to indicate that the at least one second device fails to receive first information; and receiving, by the at least one second device, the first information sent by the first device through a retransmission resource.

A first device is provided and includes: a first processing unit, configured to determine configuration information of a first resource, wherein the configuration information of the first resource comprises: period information of the first resource and information of the first resource; and a first communication unit, configured to send the configuration information of the first resource to a plurality of second devices and to multicast first information to the plurality of second devices through the first resource.

A second device is provided and includes: a second communication unit, configured to receive configuration information of a first resource sent by a first device, wherein the configuration information of the first resource comprises: period information of the first resource and information of the first resource, and the first resource is configured to multicast first information to a plurality of second devices in one period; and a second processing unit, configured to obtain the configuration information of the first resource. The second communication unit is configured to receive the first information multicasted by the first device through the first resource.

Another first device is provided and includes: a first receiving unit, configured to receive feedback information sent by at least one second device respectively, wherein the feedback information is respectively configured to indicate that the at least one second device fails to receive first information; and a first sending unit, configured to send the first information to the at least one second device through a retransmission resource respectively.

Another second device is provided and includes: a second sending unit, configured to send feedback information to a first device, wherein the feedback information is configured to indicate that the second device fails to receive first information; and a second receiving unit, configured to receive the first information sent by the first device through a retransmission resource.

Another first device is provided and includes: a processor, a memory and a communication interface, wherein the processor is configured to invoke programs stored in the memory to execute the data transmission method as described in the above.

Another second device is provided and includes: a processor, a memory and a communication interface, wherein the processor is configured to invoke programs stored in the memory to execute the retransmission method as described in the above.

A chip is provided and includes: a processor, configured to invoke and run a computer program stored in a memory, wherein a device installed with the chip is configured to execute the data transmission method as described in the above.

A chip is provided and includes: a processor, configured to invoke and run a computer program stored in a memory, wherein a device installed with the chip is configured to execute the retransmission method as described in the above.

A computer readable storage medium is provided and has a program for the data transmission method stored, wherein the program for the data transmission method, when being executed by a processor, is configured to implement the data transmission method as described in the above.

A computer readable storage medium is provided and has a program for the retransmission method stored, wherein the program for the retransmission method, when being executed by a processor, is configured to implement the retransmission method as described in the above.

A computer program product is provided and is stored on a non-transitory computer readable storage medium, wherein the computer program is configured to implement the data transmission method as described in the above, when being executed.

A computer program product is provided and is stored on a non-transitory computer readable storage medium, wherein the computer program is configured to implement the retransmission method as described in the above, when being executed. According to the present disclosure, the first device sends the first information to each of the plurality of second devices by multicasting. Compared to transmitting information by unicasting, the multicasting may reduce redundancy of the transmitted data and improve the transmission efficiency.

### BRIEF DESCRIPTION OF THE DRAWINGS

FIG. 1 is a system architecture applied by implementations of the present disclosure.
FIG. 2 is a flow chart of a data transmission method according to an embodiment of the present disclosure.
FIG. 3 is a flow chart of a data re-transmission method according to an embodiment of the present disclosure.
FIG. 4 is a structural schematic view of a first device according to an embodiment of the present disclosure.
FIG. 5 is a structural schematic view of a second device according to an embodiment of the present disclosure.
FIG. 6 is a structural schematic view of another first device according to an embodiment of the present disclosure.
FIG. 7 is a structural schematic view of another second device according to an embodiment of the present disclosure.
FIG. 8 is a structural schematic view of still another first device according to an embodiment of the present disclosure.
FIG. 9 is a structural schematic view of still another second device according to an embodiment of the present disclosure.

### DETAILED DESCRIPTION

In order to illustrate objectives, technical solutions and advantages of the present disclosure more clearly, the present disclosure will be described in further detail by referring to the accompanying drawings and embodiments. It shall be understood that the embodiments herein are described to explain the present disclosure only and do not limit the scope of the present disclosure. However, the present disclosure may be implemented in various forms and is not limited to the embodiments described herein. Rather, these embodiments are provided for providing a more thorough and comprehensive understanding for the present disclosure.

Unless otherwise defined, all technical and scientific terms used herein have the same meaning as commonly understood by those ordinary skilled persons in the art. The terms in the specification of the present disclosure are used to describe specific embodiments and do not limit the present disclosure. The term "and/or" used herein includes any and all combinations of one or more relevant listed items.

Embodiments of the present disclosure may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, a NR evolution system, a LTE-based access to unlicensed spectrum (LTE-U) system, a NR-based access to unlicensed spectrum (NR-U) system, a universal mobile telecommunication system (UMTS), a wireless local area network (WLAN), wireless fidelity (WiFi), a next generation communication system, and so on.

Generally, a traditional communication system may support a limited number of connections, and the connections may be achieved easily.

However, as communication technology develops, the mobile communication system may support not only the traditional communication, but also, for example, device-to-device (D2D) communication, machine-to-machine (M2M) communication, machine-type communication (MTC), vehicle-to-vehicle (V2V) communication, and so on. The embodiments of the present disclosure may be applied to these communication systems as well.

In some embodiments, the communication system in the embodiments of the present disclosure may be applied to carrier aggregation (CA) scenarios, dual connectivity (DC) scenarios, and standalone (SA) network distribution scenarios.

Spectrum that the embodiments of the present disclosure can be applied may not be limited herein. For example, the embodiments of the present disclosure may be applied to licensed spectrum or to unlicensed spectrum.

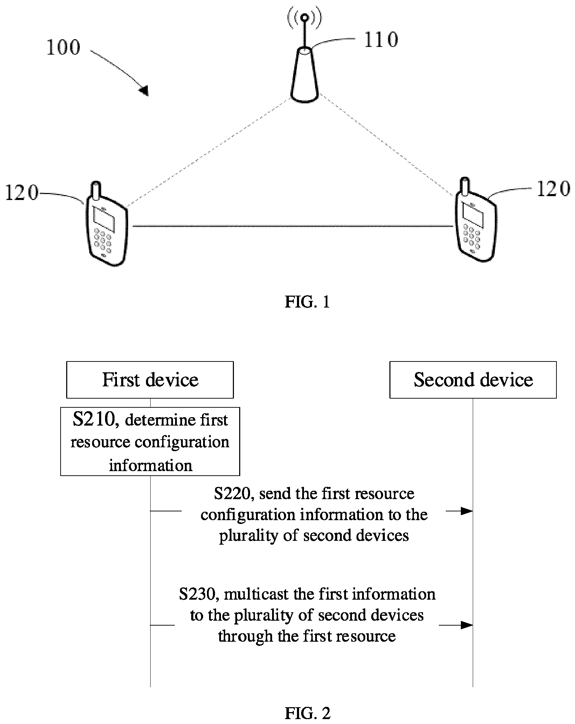

FIG. 1 shows a communication system 100 applied in the present disclosure. The communication system 100 may include: a first device 110 and a plurality of second devices 120. The first device 110 may be a network device, such as, a base station. Each of the plurality of second devices 120 may be a terminal device. Alternatively, each of the first device and the second devices may be an independent terminal device. The first device 110 may send a configuration resource to each of the plurality of second devices 120 and may multicast information to the plurality of second devices 120. Each of the plurality of second devices 120 may feed information back to the first device 110 based on reception.

In some embodiments, the communication system 100 may include other numbers of devices, which may not be limited by the present disclosure.

The network device may provide communication coverage for a specific geographic area and may communicate with terminal devices located within the coverage area. In some embodiments, the network device may be a base transceiver station (BTS) in the GSM system or the CDMA system, a base station (NodeB, NB) in the WCDMA system, an evolutional Node B (eNB or eNodeB) in the LTE system, or a radio controller in a cloud radio access network (CRAN). In some embodiments, the network device may be a relay station, an access point, a vehicle-mounted device, a wearable device, a network device in the 5G network, a network device in a public land mobile network (PLMN) of a future evolution system, and so on.

The terminal device 120 may be mobile or fixed. In some embodiments, the terminal device 120 may refer to an access terminal, a User Equipment (UE), a user unit, a user station, a mobile station, a mobile platform, a remote station, a remote terminal, a mobile device, a user device, a terminal, a wireless communication device, a user agent, or a user apparatus. The access terminal may be a cellular phone, a cordless phone, a session initiation protocol (SIP) telephone, a wireless local loop (WLL) station, a personal digital assistant (PDA), a handheld device with wireless communication function, a computing device or other processing devices connected to a wireless modem, a vehicle-mounted device, a wearable device, a user device in the 5G network, a user device in the public land mobile network (PLMN) of the future evolution system, and so on.

The following implementation of the present disclosure will illustrate in detail how the first device multicasts a first message to the plurality of second devices.

### Embodiment I

As shown in FIG. 2, a data transmission method according to an embodiment of the present disclosure is provided and includes following operations.

In an operation S210, the first device may determine configuration information of a first resource.

The first device may take a first resource to periodically multicast the first information to the plurality of second devices.

The configuration information of the first resource may include: period information of the first resource and information of the first resource. The first resource may include a set of resources. The set of resources may be repeated within the period. The information of the first resource may include information of one frequency-domain resource and/or one time-domain resource in the set of resources. For example, the information of the frequency-domain resource may include: location information of a resource block (RB). Information of the time-domain resource may include: information of a time slot and/or the number of symbols.

In some embodiments, the configuration information of the first resource may further include: information of the number of transmissions of the first information, and/or information of a time-domain range corresponding to the first resource. The first information may be information that the first device needs to multicast to the plurality of second devices. The first device may stop multicasting the first information to the plurality of second devices in response to the number of transmissions exceeding the number of times that the first information being transmitted, or in response to time length of the transmission exceeding the time-domain range corresponding to the first resource.

In some embodiments, the configuration information of the first resource may further include: identifier information of a device group or identifier information of the plurality of second devices, such as an identifier list of the second devices. The device group may include the plurality of second devices. In other words, second devices that need to receive the multicasted first information may constitute the device group. Each of the plurality of second devices may determine whether to receive the first information multicasted from the first device based on whether the second device receives the identifier of the device group, or whether the received identifier list of the second devices includes an identifier of the instant second device.

In some embodiments, the configuration information of the first resource may further include: activation indication information, and the activation indication information may be configured to indicate whether the first resource is activated. The configuration information of the first resource including an activation indication may indicate that the first resource is activated. In some embodiments, the activation configuration information may be set with a specific value, such as 1, to indicate that the first resource is activated. The activation configuration information may be configured with another value, such as 0, to indicate that the first resource is not activated. In some embodiments, more than one sets of first resources are configured. The activation indication information may be configured to indicate which group the activated first resource belongs to. That is, the activation indication information may be configured to indicate identifier information of the activated first resource.

In an operation S220, the first device may send the configuration information of the first resource to the plurality of second devices. The second devices may receive the configuration information of the first resource sent by the first device.

In some embodiments, the first device may send the configuration information of the first resource to the plurality of second devices through at least one of the following means: downlink control information (DCI), a media access control-control element (MAC CE), radio resource control (RRC) and broadcasting. The second devices may receive the configuration information of the first resource sent by the first device through at least one of: DCI, MAC CE, RRC and broadcasting.

In some embodiments, the first device may send the configuration information of the first resource to the plurality of second devices through a first DCI. The second devices may receive the configuration information of the first resource sent by the first device through the first DCI.

In some embodiments, the first DCI may be a public DCI. When the public DCI is taken to carry the configuration information of the first resource, the first device may send only one public DCI to the plurality of second devices. In this way, signaling overhead may be reduced, and a transmission efficiency may be improved.

In some embodiments, the first device may scramble the first DCI by a first scrambling method. The first scrambling method may be a predetermined scrambling method or a scrambling method determined by the first device. For example, the first device may scramble the first DCI through a specific first radio network temporary identity (RNTI). When the second device receives the specific DCI scrambled through the first RNTI, the second device may determine that the first resource configured by the configuration information of the first resource carried by the first DCI is the first information multicasted by the first device to the plurality of second devices.

In some embodiments, the first device may notify information about the first scrambling method, such as relevant parameters of the first RNTI, to the plurality of second devices.

In some embodiments, the first device may configure a second resource for the plurality of second devices. The first device may send the first DCI to the plurality of second devices through the second resource. The plurality of second devices may detect the first DCI on the second resource. The second resource may include configuration of a specific physical downlink control channel (PDCCH) or configuration of a search space of the PDCCH.

In some embodiments, the first device may send second resource configuration information to the plurality of second devices through at least one of the following means: DCI, MAC CE, RRC and broadcasting. The second devices may receive the second resource configuration information that is sent by the first device through at least one of the following means: DCI, MAC CE, RRC and broadcasting.

In some embodiments, the first device may send period information of the first resource to the plurality of second devices through the radio resource control (RRC) signaling. The first device may send other information included in the configuration information of the first resource to the plurality of second devices through at least one of the following means: downlink control signaling (DCI), media access control (MAC) control element (CE) and broadcasting. The plurality of second devices receiving the configuration information of the first resource sent by the first device may include: the plurality of second devices receiving the period information of the first resource sent by the first device through the RRC; and the plurality of second devices receiving other information included in the configuration information of the first resource sent by the first device through at least one of: downlink control information (DCI), the multimedia access control-control element (MAC CE), the radio resource control (RRC) and broadcasting.

In an operation S230, the first device may multicast the first information to the plurality of second devices through the first resource. The second devices may receive, through the first resource, the first information multicasted by the first device.

In some embodiments, the configuration information of the first resource includes the activation indication information. When the activation indication information indicates that the first resource is activated, the second devices may receive the first information multicasted by the first device on the first resource. In some embodiments, when the first resource includes a plurality of sets of first resources, the activation indication information may be configured to indicate identifier information of the activated first resource. The second devices may receive, on the indicated activated first resource, the first information multicasted by the first device.

In some embodiments, the method may further include following operations. The first device may send an activation signaling to the plurality of second devices. The activation signaling may be configured to activate the first resource. In some embodiments, when a plurality of sets of first resources are available, the activation signaling may be configured to indicate identifier information of the activated first resource. The second devices may receive the activation signaling sent by the first device, and the activation signaling may be configured to activate the first resource.

In some embodiments, the activation signaling may be carried via DCI, a MAC CE message or a RRC message.

In some embodiments, a second DCI that carries the activation signaling may be scrambled by a second scrambling method. The second scrambling method may be a predetermined scrambling method or a scrambling method determined by the first device. For example, the first device may scramble the second DCI by a specific second RNTI. The specific second RNTI may be a specific RNTI assigned to be used by the second DCI

In some embodiments, the first device may notify information about the second scrambling method, such as relevant parameters of the second RNTI, to the plurality of second devices.

In some embodiments, the first device may configure a third resource to the plurality of second devices. The first device may send the second DCI to the plurality of second devices through the third resource. The plurality of second devices may detect the second DCI on the third resource. The third resource may include configuration of a specific physical downlink control channel (PDCCH) or configuration of a search space of the PDCCH.

In some embodiments, the first device may send third resource configuration information to the plurality of second devices through at least one of the following means: DCI, MAC CE, RRC and broadcasting. The second devices may receive the third resource configuration information that is sent by the first device through at least one of the following means: DCI, MAC CE, RRC and broadcasting.

In some embodiments, the first DCI and the second DCI may be the same or different. The first scrambling method and the second scrambling method may be the same or different. Similarly, the second resource and the third resource may be the same or different.

In some embodiments, the method may further include following operations. The first device may send a deactivation signaling to the plurality of second devices. The deactivation signaling may be configured to deactivate the first resource. The second devices may receive the deactivation signaling sent by the first device, and the deactivation signaling may be configured to deactivate the first resource.

In some embodiments, the deactivation signaling may be carried via DCI, a MAC CE message or a RRC message.

In some embodiments, a third DCI that carries the deactivation signaling may be scrambled by a third scrambling method. The third scrambling method may be a predetermined scrambling method or a scrambling method determined by the first device. For example, the first device may scramble the third DCI by a specific third RNTI. The specific third RNTI may be a specific RNTI assigned to be used by the third DCI.

In some embodiments, the first device may notify information about the third scrambling method, such as relevant parameters of the third RNTI, to the plurality of second devices.

In some embodiments, the first device may configure a fourth resource to the plurality of second devices. The first device may send the third DCI to the plurality of second devices through the fourth resource. The plurality of second devices may detect the third DCI on the fourth resource. The fourth resource may include configuration of a specific physical downlink control channel (PDCCH) or configuration of a search space of the PDCCH.

In some embodiments, the first device may send fourth resource configuration information to the plurality of second devices through at least one of the following means: DCI, MAC CE, RRC and broadcasting. The second devices may receive the fourth resource configuration information that is sent by the first device through at least one of the following means: DCI, MAC CE, RRC and broadcasting.

In some embodiments, the third DCI may be the same as or different from any one of the first DCI and the second DCI. The third scrambling method may be the same as or different from any one of the first scrambling method and the second scrambling method. Similarly, the fourth resource may be the same as or different from any one of the second resource and the third resource.

In the present embodiment, the first device may send the first information to the plurality of second devices by multicasting. Compared to sending information by unicasting, the multicasting may reduce redundancy of the transmitted data and improve the transmission efficiency.

After the first device multicasts the first information to the plurality of second devices, some of the second devices may fail in receiving the first information. Therefore, the first device may retransmit the first information. In the following, the present disclosure will illustrate in detail on how the first device retransmits the first information to the plurality of second devices.

### Embodiment II

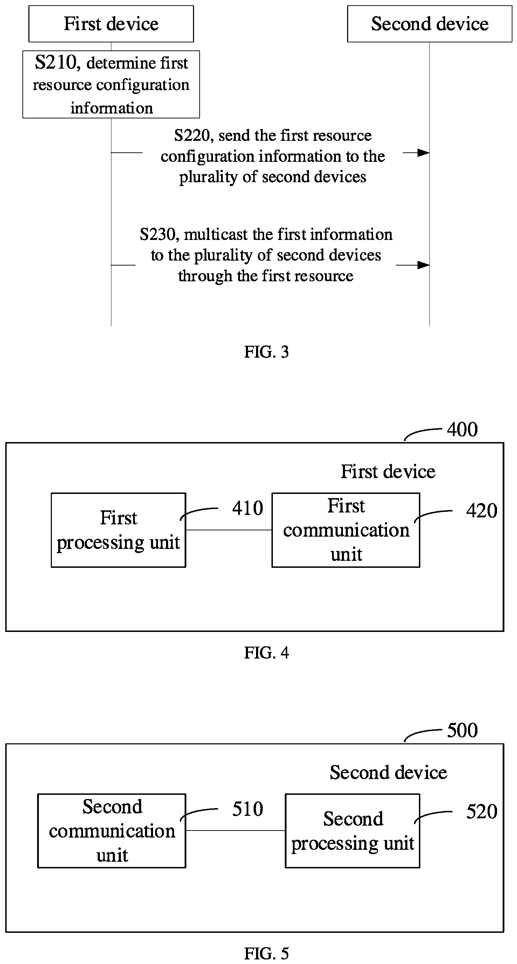

FIG. 3 is a flow chart of a data re-transmission method according to the embodiment II of the present disclosure. The method may include following operations.

In an operation S310, the first device may receive feedback information sent by at least one of the plurality of second devices. The feedback information sent by the at least one of the plurality of second devices may be configured to indicate that the at least one second device fails to receive the first information. The second device may send the feedback information to the first device, and the feedback information may be configured to indicate that the second device fails to receive the first information.

The second device may receive the first information sent by the first device on the first resource, and may send the feedback information to the first device about the reception. In a scenario I: only a second device, which fails to receive the first information, sends the feedback information to the first device. In the scenario I, signaling to be transmitted may be reduced. In a scenario II: the second device sends the feedback information to the first device about the reception of the first information, regardless of whether the second device fails to receive the first information or not. The feedback information sent by the second device, which fails to receive the first information, to the first device may be configured to indicate that the second device fails to receive the first information. The second device, which receives the first information successfully, may sent feedback information to the first device to indicate that the second device receives the first information successfully.

In an operation S320, the first device may send the first information to the at least one of the plurality of second devices via a retransmission resource. The second device may receive the first information sent by the first device through retransmission resource.

In some embodiments, the retransmission method may include any one of the following manners.

### First retransmission manner:

The first device may determine a corresponding retransmission resource for each of the at least one second device. The first device may notify information of the corresponding retransmission resource to each of the at least one second device. The second device may receive the information of the retransmission resource that is configured by and sent by the first device. The first device may retransmit the first information to each of the at least one second device separately through the corresponding retransmission resource. Each of the at least one second device may receive the first information that is retransmitted by the first device to the second device through the corresponding retransmission resource. That is, according to the retransmission method, the first device may retransmit, by unicasting, the first information to each second device that does not successfully receive the first information.

In some embodiments, information about retransmission resource configuration may be carried through DCI, the MAC CE message or the RRC message.

In some embodiments, a fourth DCI that carries the information about the retransmission resource configuration may be scrambled by a fourth scrambling method. The fourth scrambling method may be a predetermined scrambling method or a scrambling method determined by the first device. For example, the first device may scramble the fourth DCI by a specific fourth RNTI. The specific fourth RNTI may be a specific RNTI assigned to be used by the fourth DCI.

In some embodiments, the first device may notify information about the fourth scrambling method, such as relevant parameters of the fourth RNTI, to the plurality of second devices.

In some embodiments, the first device may configure a fifth resource to the plurality of second devices. The first device may send the fourth DCI to the plurality of second devices through the fifth resource. The plurality of second devices may detect the fourth DCI on the fifth resource. The fifth resource may include configuration of a specific physical downlink control channel (PDCCH) or configuration of a search space of the PDCCH.

In some embodiments, the first device may send fifth resource configuration information to the plurality of second devices through at least one of the following means: DCI, MAC CE, RRC and broadcasting. The second devices may receive the fifth resource configuration information that is sent by the first device through at least one of the following means: DCI, MAC CE, RRC and broadcasting.

In some embodiments, the fourth DCI may be the same as or different from any one of the first DCI, the second DCI, and the third DCI. The fourth scrambling method may be the same as or different from any one of the first scrambling method, the second scrambling method, and the third scrambling method. Similarly, the fifth resource may be the same as or different from any one of the second resource, the third resource, and the fourth resource.

### Second retransmission manner:

The first device may notify first indication information to the at least one second device. The first indication information may be configured to indicate retransmitting the first information. The second device may receive the first indication information sent by the first device. The first device may multicast the first information to the at least one second device through the retransmission resource. The second device may receive the first information multicasted by the first device through the retransmission resource. That is, the first device may retransmit the first information by multicasting.

In some embodiments, the first indication information may be carried by the DCI, the MAC CE message or the RRC message.

In some embodiments, a fifth DCI that carries the first indication information may be scrambled by a fifth scrambling method. The fifth scrambling method may be a predetermined scrambling method or a scrambling method determined by the first device. For example, the first device may scramble the fifth DCI by a specific fifth RNTI. The specific fifth RNTI may be a specific RNTI assigned to be used by the fifth DCI.

In some embodiments, the first device may notify information about the fifth scrambling method, such as relevant parameters of the fifth RNTI, to the plurality of second devices.

In some embodiments, the first device may configure a sixth resource to the plurality of second devices. The first device may send the fifth DCI to the plurality of second devices through the sixth resource. The plurality of second devices may detect the fifth DCI on the sixth resource. The sixth resource may include configuration of a specific physical downlink control channel (PDCCH) or configuration of a search space of the PDCCH.

In some embodiments, the first device may send sixth resource configuration information to the plurality of second devices through at least one of the following means: DCI, MAC CE, RRC and broadcasting. The second devices may receive the sixth resource configuration information that is sent by the first device through at least one of the following means: DCI, MAC CE, RRC and broadcasting.

In some embodiments, the fifth DCI may be the same as or different from any one of the first DCI, the second DCI, the third DCI, and the fourth DCI. The fifth scrambling method may be the same as or different from any one of the first scrambling method, the second scrambling method, the third scrambling method, and the fourth scrambling method. Similarly, the sixth resource may be the same as or different from any one of the second resource, the third resource, the fourth resource, and the fifth resource.

In some embodiments, the first indication information may include: activation information of the retransmission resource. The activation information of the retransmission resource may be configured to indicate that the retransmission resource is available.

In some embodiments, when a plurality of resources are available for retransmission, the first indication information may include: information about the plurality of retransmission resources.

In some embodiments, the first device may determine configuration information of the retransmission resource and notify the configuration information of the retransmission resource to the at least one second device. The second device may receive the configuration information of the retransmission resource sent by the first device.

The retransmission resource may be configured in a similar manner to the first resource in the Embodiment I.

The configuration information of the retransmission resource may include: period information of the retransmission resource and information of the retransmission resource. The retransmission resource may include a set of resources. The set of resources may be repeated within one period. The information of the retransmission resource may include information of one frequency-domain resource and/or one time-domain resource in the set of resources. For example, the information of the frequency-domain resource may include: location information of a resource block (RB). The information of the time-domain resource may include: information of a time slot and/or the number of symbols.

In some embodiments, the configuration information of the retransmission resource may further include: information of the number of retransmissions of the first information, and/or information of a time-domain range corresponding to the retransmission resource. The first information may be information that the first device needs to multicast to at least one of the plurality of second devices. The first device may stop multicasting the first information to the at least one of the plurality of second devices in response to the number of retransmissions exceeding the number of times that the first information being retransmitted, or in response to time length of the retransmission exceeding the time-domain range corresponding to the retransmission resource.

In some embodiments, the first device may send the configuration information of the retransmission resource to the plurality of second devices through at least one of the following means: the downlink control information (DCI), the media access control-control element (MAC CE), the radio resource control (RRC) and broadcasting. The at least one second device may receive the configuration information of the retransmission resource sent by the first device through at least one of: DCI, MAC CE, RRC and broadcasting.

In some embodiments, the first device may send the configuration information of the retransmission resource to the at least one of the plurality of second devices through a sixth DCI. The second device may receive the configuration information of the retransmission resource sent by the first device through the sixth DCI.

In some embodiments, the sixth DCI may be a public DCI. When the public DCI is taken to carry the configuration information of the retransmission resource, the first device may send only one public DCI to the plurality of second devices. In this way, signaling overhead may be reduced, and a transmission efficiency may be improved.

In some embodiments, the sixth DCI may be scrambled by a sixth scrambling method. The sixth scrambling method may be a predetermined scrambling method or a scrambling method determined by the first device. For example, the first device may scramble the sixth DCI by a specific sixth RNTI. When the second device receives the sixth RNTI scrambled by the sixth DCI, the second device may determine that the retransmission resource configured by the configuration information of the retransmission resource carried by the sixth DCI is the first resource retransmitted by the first device to the at least one second device.

In some embodiments, the first device may notify information about the sixth scrambling method, such as relevant parameters of the sixth RNTI, to the plurality of second devices.

In some embodiments, the first device may configure a seventh resource to the at least one second device. The first device may send the sixth DCI to the at least one second device through the seventh resource. The at least one second device may detect the sixth DCI on the seventh resource. The seventh resource may include configuration of a specific physical downlink control channel (PDCCH) or configuration of a search space of the PDCCH.

In some embodiments, the first device may send seventh resource configuration information to the at least one second device through at least one of the following means: DCI, MAC CE, RRC and broadcasting. The second device may receive the seventh resource configuration information that is sent by the first device through at least one of the following means: DCI, MAC CE, RRC and broadcasting.

In some embodiments, the sixth DCI may be the same as or different from any one of the first DCI to the fifth DCI. The sixth scrambling method may be the same as or different from any one of the first scrambling method to the fifth scrambling method. Similarly, the seventh resource may be the same as or different from any one of the second resource to the sixth resource.

In some embodiments, the fifth DCI may be the same as or different from the sixth DCI. The fifth scrambling method may be the same as or different from the sixth scrambling method. Similarly, the sixth resource may be the same as or different from the seventh resource.

In some embodiments, the first device may send period information of the retransmission resource to the at least one second device through the radio resource control (RRC) signaling. The first device may send other information included in the configuration information of the retransmission resource to the at least one second device through at least one of the following means: downlink control signaling (DCI), media access control (MAC) control element (CE) and broadcasting. The second device receiving the configuration information of the retransmission resource sent by the first device may include: the plurality of second device receiving the period information of the retransmission resource sent by the first device through the RRC; and the second device receiving other information included in the configuration information of the retransmission resource sent by the first device through at least one of: downlink control information (DCI), the multimedia access control-control element (MAC CE), the radio resource control (RRC) and broadcasting. In some embodiments, the configuration information of the retransmission resource and the configuration information of the first resource may be configured to the second device by a same signaling.

Retransmitting the first information by multicasting may reduce the redundancy of the first information during retransmission and improve the transmission efficiency.

### Third retransmission manner:

The retransmission resource may be pre-configured by the first device to the at least one second device. The first device may be triggered by the feedback information sent by the at least one second device. The first device may send the first information to the at least one second device through the retransmission resource. That is, the second device may send the feedback information to the first device when the second device fails to receive the first information, and the feedback information may indicate that the second device fails to receive the first information. When the first device receives the feedback information from the second device, the first device may retransmit the first information to the second device on the retransmission resource. After the second device sends the feedback information to the first device, the second device may receive the first information from the first device directly through the retransmission resource.

In some embodiments, the retransmission resource, which is pre-configured, may be configured to the second device together with the configuration of the first resource. That is, the configuration information of the retransmission resource and the configuration information of the first resource may be configured to the second device by the same signaling.

In some embodiments, for any of the above retransmission methods, the retransmission method further includes the following operations. The first device may send second indication information to the at least one second device, and the second indication information may be configured to indicate to deactivate the retransmission resource. The second device may receive the second indication information sent by the first device.

In some embodiments, the second indication information may be carried via the DCI, the MAC CE message or the RRC message.

In some embodiments, the seventh DCI carrying the second indication information may be scrambled by a seventh scrambling method. The seventh scrambling method may be a predetermined scrambling method or a scrambling method determined by the first device. For example, the first device may scramble the seventh DCI by a specific seventh RNTI. The seventh RNTI may be a specific RNTI assigned to be used by the seventh DCI.

In some embodiments, the first device may notify information about the seventh scrambling method, such as relevant parameters of the seventh RNTI, to the at least one second device.

In some embodiments, the first device may configure an eighth resource to the at least one second device. The first device may send the seventh DCI to the at least one second device through the eighth resource. The at least one second device may detect the seventh DCI on the eighth resource. The eighth resource may include configuration of a specific physical downlink control channel (PDCCH) or configuration of a search space of the PDCCH.

In some embodiments, the first device may send eighth resource configuration information to the at least one second device through at least one of the following means: DCI, MAC CE, RRC and broadcasting. The second device may receive the eighth resource configuration information that is sent by the first device through at least one of the following means: DCI, MAC CE, RRC and broadcasting.

In some embodiments, the seventh DCI may be the same as or different from any one of the first DCI to the sixth DCI. The seventh scrambling method may be the same as or different from any one of the first scrambling method to the sixth scrambling method. Similarly, the eighth resource may be the same as or different from any one of the second resource to the seventh resource.

### Embodiment III

After the first device multicasts the first information to the plurality of second devices, some of the plurality of second devices may fail in receiving the first information. Therefore, the first device needs to retransmit the first information. The Embodiment III may be a combination of the Embodiment I and the Embodiment II. That is, the first device multicasts the first information to the plurality of second devices by performing the data transmission method provided in the Embodiment I. When at least one of the second devices provides the feedback information indicating that reception of the first information fails, the first device retransmits the first information to at least one of the second devices by performing the data retransmission method provided in the Embodiment II. Detailed operations may refer to the Embodiment I and the Embodiment II and will not be repeatedly described.

### Embodiment IV

FIG. 4 is a structural schematic view of a first device 400 according to an embodiment of the present disclosure. The first device 400 may be configured to perform the data transmission method as described in the above embodiments.

The device 400 may include: a first processing unit 410 and a first communication unit 420.

The first processing unit 410 may be configured to determine the configuration information of the first resource. The configuration information of the first resource may include: period information of the first resource and the information of the first resource.

The first communication unit 420 may be configured to send the configuration information of the first resource to the plurality of second devices and to multicast the first information to the plurality of second devices through the first resource.

In some embodiments, the configuration information of the first resource may further include: information of the number of transmissions of the first information, and/or information of the time-domain range corresponding to the first resource.

In some embodiments, the configuration information of the first resource may further include: identifier information of the device group or identifier information of the plurality of second devices. The device group may include the plurality of second devices.

In some embodiments, the configuration information of the first resource may further include: activation indication information, and the activation indication information may be configured to indicate whether the first resource is activated. In some embodiments, when the first resource includes more than one sets of first resources, the activation indication information may be configured to indicate identifier information of the activated first resource.

In some embodiments, the first communication unit may be configured to send the configuration information of the first resource to the plurality of second devices through at least one of the following means: downlink control information (DCI), the media access control-control element (MAC CE), the radio resource control (RRC) and broadcasting.

In some embodiments, the first communication unit may be configured to send the configuration information of the first resource to the plurality of second devices through the public DCI.

In some embodiments, the first communication unit may be configured to send period information of the first resource to the plurality of second devices through the radio resource control (RRC) signaling; and to send other information included in the configuration information of the first resource to the plurality of second devices through at least one of the following means: downlink control signaling (DCI), media access control (MAC) control element (CE) and broadcasting.

In some embodiments, the first communication unit may be configured to send the activation signaling to the plurality of second devices. The activation signaling may be configured to activate the first resource. In some embodiments, when a plurality of sets of first resources are available, the activation signaling may be configured to indicate identifier information of the activated first resource.

In some embodiments, the first communication unit may be configured to send a deactivation signaling to the plurality of second devices. The deactivation signaling may be configured to deactivate the first resource.

### Embodiment V

FIG. 5 is a structural schematic view of a second device 500 according to an embodiment of the present disclosure. The second device 500 may be configured to perform the data transmission method as described in the above embodiments.

The device 500 may include: a second communication unit 510 and a second processing unit 520.

The second communication unit 510 may be configured to receive the configuration information of the first resource sent by the first device. The configuration information of the first resource may include: period information of the first resource and the information of the first resource. The first resource may be configured to multicast the first information to the plurality of second devices in one period.

The second processing unit 420 may be configured to obtain the configuration information of the first resource.

The second processing unit 420 may be configured to receive the first information multicasted by the first device to the plurality of second devices through the first resource.

In some embodiments, the configuration information of the first resource may further include: information of the number of transmissions of the first information, and/or information of the time-domain range corresponding to the first resource.

In some embodiments, the configuration information of the first resource may further include: identifier information of the device group or identifier information of the plurality of second devices. The device group may include the plurality of second devices.

In some embodiments, the configuration information of the first resource may further include: activation indication information, and the activation indication information may be configured to indicate whether the first resource is activated. In some embodiments, when the first resource includes more than one sets of first resources, the activation indication information may be configured to indicate identifier information of the activated first resource.

In some embodiments, the second communication unit may be configured to receive the configuration information of the first resource sent by the first device through at least one of the following means: downlink control information (DCI), the media access control-control element (MAC CE), the radio resource control (RRC) and broadcasting.

In some embodiments, the second communication unit may be configured to receive the configuration information of the first resource sent by the first device through the public DCI.

In some embodiments, the second communication unit may be configured to receive period information of the first resource sent by the first device through the radio resource control (RRC) signaling; and to receive other information included in the configuration information of the first resource sent by the first device through at least one of the following means: downlink control signaling (DCI), media access control (MAC) control element (CE) and broadcasting.

In some embodiments, the second communication unit may be configured to receive the activation signaling sent by the first device. The activation signaling may be configured to activate the first resource. In some embodiments, when a plurality of sets of first resources are available, the activation signaling may be configured to indicate identifier information of the activated first resource.

In some embodiments, the second communication unit may be configured to receive the deactivation signaling sent by the first device. The deactivation signaling may be configured to deactivate the first resource.

### Embodiment VI

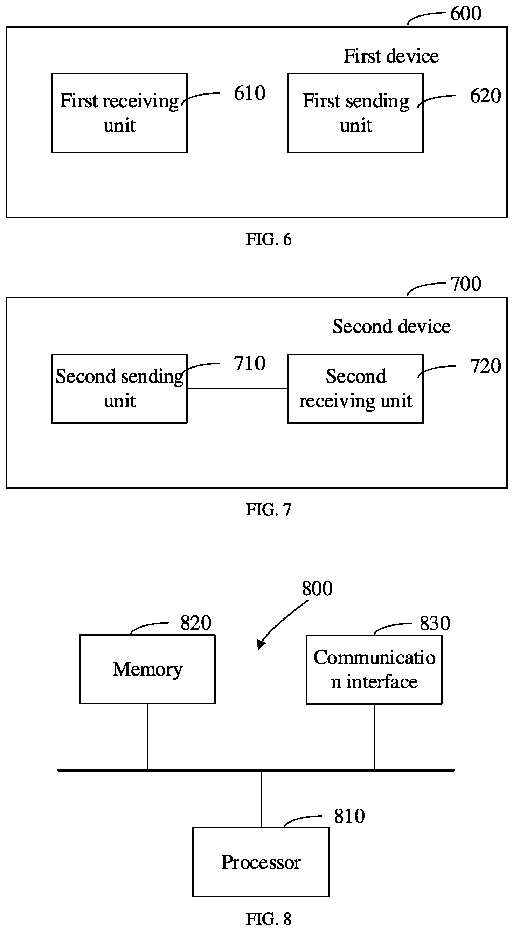

FIG. 6 is a structural schematic view of a first device 600 according to an embodiment of the present disclosure. The first device 600 may include a first receiving unit 610 and a first sending unit 620.

The first receiving unit 610 may be configured to receive the feedback information sent by at least one of the plurality of second devices. The feedback information sent by the at least one of the plurality of second devices may be configured to indicate that the at least one second device fails to receive the first information.

The first sending unit 620 may be configured to send the first information to the at least one of the plurality of second devices through the retransmission resource.

In some embodiments, the first device may further include a third processing unit, configured to determine a corresponding retransmission resource for each of the at least one second device. The first sending unit may be configured to notify information of the corresponding retransmission resource to each of the at least one second device and to retransmit the first information to each of the at least one second device separately through the corresponding retransmission resource.

In some embodiments, the first sending unit may be configured to notify first indication information to the at least one second device. The first indication information may be configured to indicate retransmitting the first information. The first sending unit may be configured to multicast the first information to the at least one second device through the retransmission resource.

In some embodiments, the first indication information may be carried by the DCI, the MAC CE or the RRC signaling.

In some embodiments, the first indication information may include: activation information of the retransmission resource.

In some embodiments, when a plurality of resources are available for retransmission, the first indication information may include: information about the plurality of retransmission resources.

In some embodiments, the retransmission resource may be pre-configured by the first device to the at least one second device. The first sending unit may be triggered by the feedback information sent by the at least one second device and may be configured to send the first information to the at least one second device through the retransmission resource.

In some embodiments, the first sending device may be configured to send second indication information to the at least one second device. The second indication information may be configured to indicate to deactivate the retransmission resource.

### Embodiment VII

FIG. 7 is a structural schematic view of a second device 700 according to an embodiment of the present disclosure. The second device 700 may be configured to perform the retransmission method as described in the above embodiments.

The device 700 may include: a second sending unit 710 and a second receiving unit 720.

The second sending unit 710 may be configured to send the feedback information to the first device, and the feedback information may be configured to indicate that the second device fails to receive the first information.

The second receiving unit 720 may be configured to receive the first information sent by the first device through the retransmission resource.

In some embodiments, the second receiving unit may be configured to receive information of the retransmission resource, which is configured and sent by the first device.

In some embodiments, the second receiving unit may be configured to receive the first indication information sent by the first device. The first indication information may be configured to indicate retransmitting the first information. The second receiving unit may be configured to receive the first information sent by the first device through the retransmission resource.

In some embodiments, the first indication information may be carried by the DCI, the MAC CE or the RRC signaling.

In some embodiments, the first indication information may include: activation information of the retransmission resource.

In some embodiments, when a plurality of resources are available for retransmission, the first indication information may include: information about the plurality of retransmission resources.

In some embodiments, the retransmission resource may be pre-configured by the first device to the at least one second device. The second receiving unit may be configured to directly receive the first information sent by the first device through the retransmission resource after sending the feedback information to the first device.

In some embodiments, the second sending device may be configured to receive the second indication information sent by the first device. The second indication information may be configured to indicate to deactivate the retransmission resource.

### Embodiment VIII

FIG. 8 is a structural schematic view of a device 800 according to an embodiment of the present disclosure. The device 800 may be configured to perform the data transmission method as described in the above embodiments.

The device 800 may include: a processor 810, a memory 820 and a communication interface 830. The processor 810 may invoke programs stored in the memory 820 to execute corresponding processes the data transmission method performed by the first device in the above embodiments. In some embodiments, the processor 810 may invoke programs stored in the memory 820 to execute corresponding processes of the data transmission method performed by the second device in the above embodiments. Further, an execution result may be sent out through the communication interface 830.

The processor 810 may be an independent component or a term representing a plurality of processing components. For example, the processor 810 may be a CPU, an ASIC, or one or more integrated circuits configured to implement the above methods, such as at least one microprocessor DSP or at least one programmable gate arrays (FPGA), and so on.

### Embodiment IX

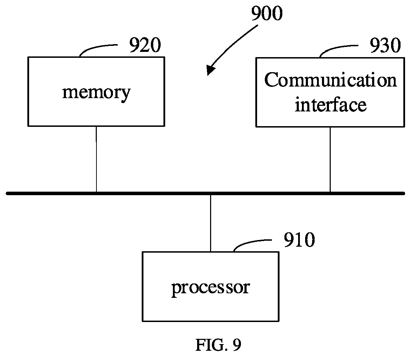

FIG. 9 is a structural schematic view of a device 900 according to an embodiment of the present disclosure. The device 900 may be configured to perform the retransmission method as described in the above embodiments.

The device 900 may include: a processor 910, a memory 920 and a communication interface 930.

The processor 910 may invoke programs stored in the memory 920 to execute corresponding processes of the retransmission method performed by the first device in the above embodiments. In some embodiments, the processor 910 may invoke programs stored in the memory 920 to execute corresponding processes of the retransmission method performed by the second device in the above embodiments. Further, an execution result may be sent out through the communication interface 930.

The processor 910 may be an independent component or a term representing a plurality of processing components. For example, the processor 910 may be a CPU, an ASIC, or one or more integrated circuits configured to implement the above methods, such as at least one microprocessor DSP or at least one programmable gate arrays (FPGA), and so on.

Embodiments of the present disclosure provide a chip. The chip includes: a processor, configured to invoke and run a computer program from a memory, and a device installed with the chip may execute the data transmission method as previously described.

Embodiments of the present disclosure provide a chip. The chip includes: a processor, configured to invoke and run a computer program from a memory, and a device installed with the chip may execute the retransmission method as previously described.

Embodiments of the present disclosure provide a computer readable storage medium. The computer readable storage medium stores a program for a data transmission method, and the program for the data transmission method may be configured to implement the above-mentioned data transmission method when being executed by a processor.

Embodiments of the present disclosure provide a computer readable storage medium. The computer readable storage medium stores a program for a retransmission, and the program for the retransmission method may be configured to implement the above-mentioned retransmission method when being executed by a processor.

Embodiments of the present disclosure provide a computer program product. The computer program product may be stored on a non-transitory computer readable storage medium, and the computer program may be configured to implement the above-mentioned data transmission method when being executed.

Embodiments of the present disclosure provide a computer program product. The computer program product may be stored on a non-transitory computer readable storage medium, and the computer program may be configured to implement the above-mentioned retransmission method when being executed.

The present invention is described by referring to flowcharts and/or block diagrams of methods, devices (systems), and computer program products of the embodiments. It shall be understood that each operation and/or each block in the flowchart and/or in the block diagram and combination of operations and/or blocks in the flowchart and/or block diagram may be implemented by computer program instructions. These computer program instructions may be provided to a processor of a general-purpose computer, a dedicated computer, an embedded processor, a chip, or other programmable data processing devices to produce a machine, such that the instructions executed by the processor of a computer or other programmable data processing devices may produce a device for implementing a function specified in one or more operations of a flowchart and/or one or more blocks of a block diagram. The program may be stored in a computer-readable storage medium, which may include: a read-only memory (ROM), a random access memory (RAM), a magnetic disk, an optical disk, and so on.

The above embodiments may illustrate, but do not limit, the present disclosure. Any ordinary skilled person in the art may achieve a plurality of substitutable examples within the scope of the claims. Any ordinary skilled person in the art shall be aware that appropriate adjustments, modifications, and so on may be made to the embodiments without departing from the scope of the appended claims. Accordingly, any modifications and variations made in accordance with the spirit and principles of the present disclosure are within the scope of the appended claims.

## Claims

1. A data transmission method, comprising:
determining, by a first device, configuration information of a first resource, wherein the configuration information of the first resource comprises: period information of the first resource and information of the first resource;
sending, by the first device, the configuration information of the first resource to a plurality of second devices; and
multicasting, by the first device, first information to the plurality of second devices through the first resource.

2. The method according to claim 1, wherein the configuration information of the first resource further comprises: information of the number of transmissions of the first information, and/or information of a time-domain range corresponding to the first resource.

3. The method according to claim 1 or claim 2, wherein the configuration information of the first resource further comprises:
identifier information of a device group, wherein the device group comprises the plurality of second devices; or
identifier information of the plurality of second devices.

4. The method according to any one of claims 1 to 3, wherein the configuration information of the first resource further comprises activation indication information; and
the activation indication information is configured to indicate whether the first resource is activated; or
the activation indication information is configured to indicate identifier information of an activated first resource in response to the first resource comprising more than one sets of first resources.

5. The method according to any one of claims 1 to 4, wherein the sending the configuration information of the first resource to a plurality of second devices, comprises:
sending, by the first device, the configuration information of the first resource to the plurality of second devices through at least one of:
downlink control information (DCI), a media access control-control element (MAC CE), a radio resource control (RRC) signaling, and a broadcasting.

6. The method according to claim 5, wherein the sending the configuration information of the first resource to a plurality of second devices, comprises:
sending, by the first device, the configuration information of the first resource to the plurality of second devices through public DCI.

7. The method according to claim 5, wherein the sending the configuration information of the first resource to a plurality of second devices, comprises:
sending, by the first device, the period information of the first resource to the plurality of second devices through the radio resource control (RRC) signaling; and
sending, by the first device, other information in the configuration information of the first resource to the plurality of second devices through at least one of the DCI, the MAC CE, and the broadcasting.

8. The method according to any one of claims 1 to 7, further comprising:
sending, by the first device, an activation signaling to the plurality of second devices, wherein, the activation signaling is configured to activate the first resource; or
the activation signaling is configured to indicate the identifier information of an activated first resource in response to more than one sets of first resources being available.

9. The method according to any one of claims 1 to 8, further comprising: sending, by the first device, a deactivation signaling to the plurality of second devices, wherein the deactivation signaling is configured to deactivate the first resource.

10. A data transmission method, comprising:
receiving, by at least one of a plurality of second devices, configuration information of a first resource sent by a first device, wherein the configuration information of the first resource comprises: period information of a first resource and information of the first resource, and the first resource is configured to multicast first information to the plurality of second devices in one period; and
receiving, by the at least one of a plurality of second devices, the first information multicasted by the first device through the first resource.

11. The method according to claim 10, wherein the configuration information of the first resource further comprises: information of the number of transmissions of the first information, and/or information of a time-domain range corresponding to the first resource.

12. The method according to claim 10 or claim 11, wherein the configuration information of the first resource further comprises:
identifier information of a device group, wherein the device group comprises the plurality of second devices; or
identifier information of the plurality of second devices.

13. The method according to any one of claims 10 to 12, wherein the configuration information of the first resource further comprises: activation indication information;
wherein the activation indication information is configured to indicate whether the first resource is activated; or
the activation indication information is configured to indicate identifier information of an activated first resource in response to the first resource comprising more than one sets of first resources.

14. The method according to any one of claims 10 to 13, wherein the receiving configuration information of the first resource sent by a first device, comprises:
receiving, by the at least one of the plurality of second devices, the configuration information of the first resource sent by the first device through at least one of: downlink control information (DCI), a media access control-control element (MAC CE), a radio resource control (RRC) signaling, and broadcasting.

15. The method according to claim 14, wherein the receiving configuration information of the first resource sent by a first device, comprises:
receiving, by the second device, the configuration information of the first resource sent by the first device through public DCI.

16. The method according to claim 14, wherein the receiving configuration information of the first resource sent by a first device, comprises:
receiving, by the at least one of the plurality of second device, the period information of the first resource sent by the first device through the RRC signaling; and
receiving other information comprised in the configuration information of the first resource sent by the first device through at least one of: the DCI, the MAC CE, and the broadcasting.

17. The method according to any one of claims 10 to 16, further comprising:
receiving, by the at least one of the plurality of second device, an activation signaling sent by the first device,
wherein the activation signaling is configured to activate the first resource; or
the activation signaling is configured to indicate the identifier information of an activated first resource in response to the more than one sets of first resources being available.

18. The method according to any one of claims 10 to 17, further comprising:
receiving, by the at least one of the plurality of second device, a deactivation signaling sent by the first device, wherein the deactivation signaling is configured to deactivate the first resource.

19. A retransmission method, comprising:
receiving, by a first device, feedback information sent by at least one second device respectively, wherein the feedback information is respectively configured to indicate that the at least one second device fails to receive first information; and
sending, by the first device, the first information to the at least one second devicethrough a retransmission resource respectively.

20. The method according to claim 19, further comprising:
determining, by the first device, a corresponding retransmission resource for each of the at least one second device; and
notifying information of the corresponding retransmission resource to the each of the at least one second device;
wherein the sending the first information to the at least one second device through a retransmission resource respectively, comprises:
retransmitting, by the first device, the first information to each of the at least one second device through the corresponding retransmission resource.

21. The method according to claim 19, further comprising:
notifying, by the first device, first indication information to the at least one second device respectively, wherein the first indication information is configured to indicate retransmitting the first information;
wherein the sending the first information to the at least one second device through a retransmission resource, comprises:
multicasting the first information to the at least one second device through the retransmission resource.

22. The method according to claim 21, wherein the first indication information is carried by downlink control information (DCI), a media access control-control element (MAC CE), or a radio resource control (RRC) signaling.

23. The method according to claim 21 or claim 22, wherein the first indication information comprises activation information of the retransmission resource.

24. The method according to any one of claims 21 to 23, wherein the first indication information comprises: information of a plurality of retransmission resource in response to the plurality of resources being available for retransmission.

25. The method according to claim 19, wherein the retransmission resource is pre-configured by the first device to the at least one second device; and
the sending the first information to the at least one second device through a retransmission resource, comprises:
being triggered by the feedback information sent by the at least one second device; and
sending the first information to the at least one second device through the retransmission resource respectively.

26. The method according to any one of claims 19 to 25, further comprising: sending, by the first device, second indication information to the at least one second device, wherein the second indication information is configured to indicate deactivating the retransmission resource.

27. A retransmission method, comprising:
sending, by at least one second device respectively, feedback information to a first device, wherein the feedback information is respectively configured to indicate that the at least one second device fails to receive first information; and
receiving, by the at least one second device, the first information sent by the first device through a retransmission resource.

28. The method according to claim 27, further comprising:
receiving, by the at least one second device, information of the retransmission resource, which is configured and sent by the first device.

29. The method according to claim 27, further comprising:
receiving, by the at least one second device respectively, first indication information sent by the first device, wherein the first indication information is configured to indicate retransmitting the first information;
wherein the receiving the first information sent by the first device through a retransmission resource, comprises:
receiving, by the at least one second device, the first information multicasted by the first device through the retransmission resource.

30. The method according to claim 29, wherein the first indication information is carried by downlink control information (DCI), a media access control-control element (MAC CE), or a radio resource control (RRC) signaling.

31. The method according to claim 29 or claim 30, wherein the first indication information comprises: activation information of the retransmission resource.

32. The method according to claim 29 or claim 30, wherein the first indication information comprises information of a plurality of retransmission resources in response to the plurality of resources being available for retransmission.

33. The method according to claim 27, wherein the retransmission resource is pre-configured by the first device to the at least one second device; and
the receiving the first information sent by the first device through a retransmission resource, comprises:
directly receiving, by the at least one second device respectively, the first information sent by the first device through the retransmission resource after the feedback information being sent to the first device.

34. The method according to any one of claims 27 to 33, further comprising:
receiving, by the at least one second device, second indication information sent by the first device, wherein the second indication information is configured to indicate deactivating the retransmission resource.

35. A first device, comprising:
a first processing unit, configured to determine configuration information of a first resource, wherein the configuration information of the first resource comprises: period information of the first resource and information of the first resource; and
a first communication unit, configured to send the configuration information of the first resource to a plurality of second devices and to multicast first information to the plurality of second devices through the first resource.

36. The device according to claim 35, wherein the configuration information of the first resource further comprises: information of the number of transmissions of the first information, and/or information of a time-domain range corresponding to the first resource.

37. The device according to claim 35 or 36, wherein the configuration information of the first resource further comprises:
identifier information of a device group, wherein the device group comprises the plurality of second devices; or
identifier information of the plurality of second devices.

38. The device according to any one of claims 35 to 37, wherein the configuration information of the first resource further comprises: activation indication information; and
the activation indication information is configured to indicate whether the first resource is activated; or
the activation indication information is configured to indicate identifier information of an activated first resource in response to the first resource comprising more than one sets of first resources.

39. The device according to any one of claims 35 to 38, wherein the first communication unit is configured to send the configuration information of the first resource to the plurality of second devices through at least one of:
downlink control information (DCI), a media access control-control element (MAC CE), a radio resource control (RRC) signaling, and broadcasting.

40. The device according to claim 39, wherein the first communication unit is configured to send the configuration information of the first resource to the plurality of second devices through public DCI.

41. The device according to claim 39, wherein the first communication unit is configured to:
send the period information of the first resource to the plurality of second devices through the radio resource control (RRC) signaling; and
send other information comprised in the configuration information of the first resource to the plurality of second devices through at least one of: the DCI, the MAC CE and the broadcasting.

42. The device according to any one of claims 35 to 41, wherein the first communication unit is configured to send an activation signaling to the plurality of second devices, wherein,
the activation signaling is configured to activate the first resource; or
the activation signaling is configured to indicate the identifier information of an activated first resource in response to more than one sets of first resources being available.

43. The device according to any one of claims 35 to 42, wherein the first communication unit is configured to send a deactivation signaling to the plurality of second devices, wherein the deactivation signaling is configured to deactivate the first resource.

44. A second device, comprising:
a second communication unit, configured to receive configuration information of a first resource sent by a first device, wherein the configuration information of the first resource comprises: period information of the first resource and information of the first resource, and the first resource is configured to multicast first information to a plurality of second devices in one period; and
a second processing unit, configured to obtain the configuration information of the first resource;
wherein the second communication unit is configured to receive the first information multicasted by the first device through the first resource.

45. The device according to claim 44, wherein the configuration information of the first resource further comprises: information of the number of transmissions of the first information, and/or information of a time-domain range corresponding to the first resource.

46. The device according to claim 44 or 45, wherein the configuration information of the first resource further comprises:
identifier information of a device group, wherein the device group comprises the plurality of second devices; or
identifier information of the plurality of second devices.

47. The device according to any one of claims 44 to 46, wherein the configuration information of the first resource further comprises: activation indication information;
wherein the activation indication information is configured to indicate whether the first resource is activated; or
the activation indication information is configured to indicate identifier information of an activated first resource in response to the first resource comprising more than one sets of first resources.

48. The device according to any one of claims 44 to 47, wherein the second communication unit is configured to receive the configuration information of the first resource sent by the first device through at least one of: downlink control information (DCI), a media access control-control element (MAC CE), a radio resource control (RRC) signaling, and a broadcasting.

49. The device according to claim 48, wherein the second communication unit is configured to receive the configuration information of the first resource sent by the first device through public DCI.

50. The device according to claim 49, wherein the second communication unit is configured to:
receive the period information of the first resource sent by the first device through the RRC signaling; and
receive other information comprised in the configuration information of the first resource sent by the first device through at least one of: the DCI, the MAC CE, and the broadcasting.

51. The device according to any one of claims 44 to 50, wherein the second communication unit is configured to receive an activation signaling sent by the first device,
wherein the activation signaling is configured to activate the first resource; or
the activation signaling is configured to indicate the identifier information of an activated first resource in response to the more than one sets of first resources being available.

52. The device according to any one of claims 44 to 51, wherein the second communication unit is configured to receive a deactivation signaling sent by the first device, wherein the deactivation signaling is configured to deactivate the first resource.

53. A first device, comprising:
a first receiving unit, configured to receive feedback information sent by at least one second device respectively, wherein the feedback information is respectively configured to indicate that the at least one second device fails to receive first information; and
a first sending unit, configured to send the first information to the at least one second device through a retransmission resource respectively.

54. The device according to claim 53, further comprising: a third processing unit, configured to determine a corresponding retransmission resource for each of the at least one second device;
wherein the first sending unit is further configured to:
notify information of the corresponding retransmission resource to each of the at least one second device; and
retransmit the first information to the each of the at least one second device through the corresponding retransmission resource respectively.

55. The device according to claim 53, wherein,
the first sending unit is configured to notify first indication information to the at least one second device respectively, wherein the first indication information is configured to indicate retransmitting the first information; and
the first sending unit is configured to multicast the first information to the at least one second device through the retransmission resource.

56. The device according to claim 55, wherein the first indication information is carried by downlink control information (DCI), a media access control-control element (MAC CE), or a radio resource control (RRC) signaling.

57. The device according to claim 55 or 56, wherein the first indication information comprises: activation information of the retransmission resource.

58. The device according to any one of claims 55 to 57, wherein the first indication information comprises: information of a plurality of retransmission resources in response to the plurality of resources being available for retransmission.

59. The device according claim 53, wherein the retransmission resource is pre-configured by the first device to the at least one second device; and
the first sending unit is configured to be triggered by the feedback information sent by the at least one second device to send the first information to the at least one second device through the retransmission resource respectively.

60. The device according to any one of claims 53 to 59, wherein the first sending unit is further configured to send second indication information to the at least one second device, wherein the second indication information is configured to indicate deactivating the retransmission resource.

61. A second device, comprising:
a second sending unit, configured to send feedback information to a first device, wherein the feedback information is configured to indicate that the second device fails to receive first information; and
a second receiving unit, configured to receive the first information sent by the first device through a retransmission resource.

62. The device according to claim 61, wherein the second receiving unit is configured to receive information of the retransmission resource, which is configured and sent by the first device.

63. The device according to claim 61, wherein the second receiving unit is configured to receive first indication information sent by the first device, wherein the first indication information is configured to indicate retransmitting the first information; and
the second receiving unit is further configured to receive the first information multicasted by the first device through the retransmission resource.

64. The device according to claim 63, wherein the first indication information is carried by downlink control information (DCI), a media access control-control element (MAC CE), or a radio resource control (RRC) signaling.

65. The device according to claim 63 or 64, wherein the first indication information comprises: activation information of the retransmission resource.

66. The device according to any one of claims 63 to 65, wherein the first indication information comprises: information of a plurality of retransmission resources in response to the plurality of resources being available for retransmission.

67. The device according to claim 61, wherein the retransmission resource is pre-configured by the first device to the at least one second device; and
the second receiving unit is configured to directly receive the first information sent by the first device through the retransmission resource after the feedback information is sent to the first device.

68. The device according to any one of claims 61 to 67, wherein the second receiving unit is configured to receive second indication information sent by the first device, wherein the second indication information is configured to indicate deactivating the retransmission resource.

69. A first device, comprising: a processor, a memory and a communication interface, wherein the processor is configured to invoke programs stored in the memory to execute the data transmission method according to any one of claims 1 to 18 and send out an execution result through the communication interface.

70. A second device, comprising: a processor, a memory and a communication interface, wherein the processor is configured to invoke programs stored in the memory to execute the retransmission method according to any one of claims 19 to 34 and send out an execution result through the communication interface.

71. A chip, comprising a processor, configured to invoke and run a computer program stored in a memory, wherein a device installed with the chip is configured to execute the data transmission method according to any one of claims 1 to 18.

72. A chip, comprising a processor, configured to invoke and run a computer program stored in a memory, wherein a device installed with the chip is configured to execute the retransmission method according to any one of claims 19 to 34.

73. A computer readable storage medium, having a program for the data transmission method stored, wherein the program for the data transmission method is configured to implement the data transmission method according to any one of claims 1 to 18 when being executed by a processor.

74. A computer readable storage medium, having a program for the retransmission method stored, wherein the program for the retransmission method is configured to implement the retransmission method according to any one of claims 19 to 34 when being executed by a processor.

75. A computer program product, stored on a non-transitory computer readable storage medium, wherein the computer program is configured to implement the data transmission method according to any one of claims 1 to 18 when being executed.

76. A computer program product, stored on a non-transitory computer readable storage medium, wherein the computer program is configured to implement the retransmission method according to any one of claims 19 to 34 when being executed.
